Europäisches Patentamt

European Patent Office

Office européen des brevets

(11) Publication number: **0 120 294**
**A2**

(12) # EUROPEAN PATENT APPLICATION

(21) Application number: **84101850.0**

(22) Date of filing: **22.02.84**

(51) Int. Cl.³: **A 01 L 3/00**

(30) Priority: **28.02.83 IT 8410483**

(43) Date of publication of application:
**03.10.84 Bulletin 84/40**

(84) Designated Contracting States:
**AT BE CH DE FR GB IT LI LU NL SE**

(71) Applicant: **Tessaro, Vanio**
**Via Bongioanni, 118**
**I-31030 Biadene di Montebelluna (Treviso)(IT)**

(72) Inventor: **Tessaro, Vanio**
**Via Bongioanni, 118**
**I-31030 Biadene di Montebelluna (Treviso)(IT)**

(74) Representative: **Piovesana, Paolo**
**Corso del Popolo, 70**
**I-30172 Venezia-Mestre(IT)**

(54) Horseshoe.

(57) A horseshoe comprising a bar (1) to be curved according to the external lower outline of the hoof (2) to be shod and provided with a plurality of points (5) placed parallely to its edge and which have to be introduced into the thickness of the nail and also comprising tie bands (7,10) for the bond to the hoof. The points (5) are placed along two longitudinal rows on at least a plate (4) applied to the bar (1), in which also the tie bands (7,10) provided with adjusting means of the tension are foreseen.

**FIG.1**

EP 0 120 294 A2

Croydon Printing Company Ltd.

This invention relates to a horseshoe.

Well known are horseshoes essentially comprising a curved bar, in which the external edge is shaped such as to coincide with the lower edge of the nail of the horse; this curved bar is then applied to the nail by means of nails being 4-5 cm long, passing throught the horseshoe and throught the thickness of the nail and when the point of these nails has come out of the hoof, then they are bent downwards for clinching in order to ensure the stability of the bond.

These well known horseshoes and the relative way of application have been used in an almost identical way for years, in that they represent the most effective system of shoeing horses, although having many drawbacks, of which:

- the laboriousness of the shoeing operations: in fact, these are slow and expensive for the need of fitting the normalized shoe to the particular shape of the hoof to be shod; furthermore they are risky and delicate for the difficulty of keeping the nails in the thickness of the nail of the horse and avoiding that they come out of the inside of this;

- the possibility of causing shocks and damages to the

- 1 -

horse, in the not infrequent case of erroneous application of the nails;

- the necessity of skilled persons who are more and more difficult to be found:

- a damage of the nail of the horses, and

- a weak hold of the shoe, especially in the case of delicate nails, with the consequent possibility of detachment of the shoe after a short time that it has been applied.

In DE-C- 65760 a horseshoe is described, provided with a longitudinal row of points coming out of its higher surface and suitable for penetrating into the hoof during the shoeing. Furthermore side bands are foreseen wrapping the hoof and keeping it firmly in the correct position.

A drawback of this horseshoe consists in that the forging, that is necessary to fit the normalized shoe to the particular hoof, damages the points irremediably, preventing or in any case making difficult and inaccurate the subsequent introduction into the hoof during the shoeing.

Another drawback consists in that the wedges, when used for adjusting the plumbs of the horse, have to be necessarily placed between the higher surface of the horseshoe and the lower edge of the hoof, so reducing the useful lenght of the points no more ensuring the correct stabilization.

Another drawback consists in that the arrangement of the points along one row makes unsteady the correct engagement with the hoof, already uncertain it itself, due to the small number of the same points.

The aim of the invention is to eliminate the drawbacks referred earlier.

According to the invention this aim is attained with a horseshoe comprising a bar to be curved according to the external lower outline of the hoof to be shod and provided with a plurality of points placed parallely to its edge and which have to be introduced into the thickness of the nail and also comprising tie bands for the bond to the hoof caracterized in that the points are placed along at least a longitudinal row on at least a plate applied to the bar, in which also the tie bands provided with adjusting means of the tension are foreseen.

Advantageously the bar and, if necessary, the plate can be provided with outer radial cuttings.

Advantageously the points can be directly obtained in the plate by blanking and subsequent bending of the blanked portions and can be oriented variedly.

Advantageously the points can be obtained in separated plates applied to a single bar.

Advantageously the points can be placed along two parallel rows.

The present invention is hereinafter further clarified with reference to the enclosed drawings sheet in which:

Figure 1 shows in perspective wiew a horseshoe according to the invention,

Figure 2 shows it according to the fragmentary vertical longitudinal section II-II of Figure 1 applied to the hoof of a horse, and

Figure 3 shows it according to the fragmentary frontal section III-III of Figure 2.

As can be seen from the drawings the horseshoe according to the invention essentially comprises a bar 1 curved according to the external inferior outline of the hoof 2 to be shod.

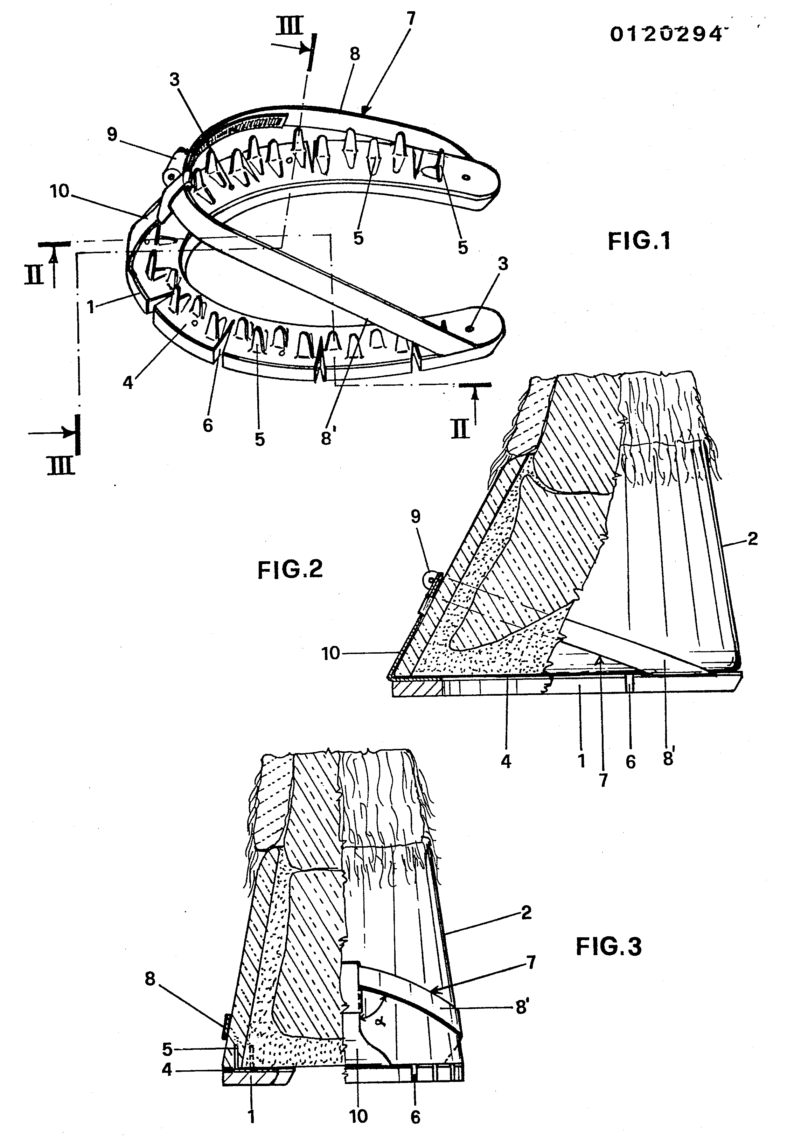

To the bar 1 a plate 4 is applied by means of screws 3 or welding; this plate 4 is provided with a plurality of points 5, having different height and placed along two rows parallel to the edges of the bar 1; these points are obtained by blanking and subsequent bending upwards of the blanked portions. As it may be seen in figure 1 the points 5 are placed according different planes in order to allow the stabiliziation of the horseshoe on the hoof 2 with any direction of stresses.

Both the bar 1 and the plate 4 are also provided, near their external edge, with a plurality of radial cuttings 6 having the purpose of making easier the cold bending of the shoe for its fitting to the hoof 2.

The horseshoe according to the invention also comprises a tie band 7 connecting the two ends of the bar 1 and transversally passing above the hoof 2.

The tie band 7 comprises two straps 8,8', each having one end directly connected to the end of the bar 1 and the other end fit for a mutual engagement by means of a tension element 9 which in this embodiment consists of a screw for traditional metal pipe-wrapping strap.

At a position equidistant from the ends, another tie band 10 is connected to the bar 1, and which is connected above to the transversal band 7. At the top the longitudinal band 10 is preferably bent inwardly in such a way as to form a loop in which the transversal band 7 engages. Preferably the bond between each band 7, 10 and the bar 1 consists of the same means (screws 3 or welding) binding the plate 4 to the bar 1.

The horseshoe according to the invention is applied as follows:

the bar 1, to which the plate 4 and the bands 7 and 10 have been applied, is cold adjusted to the particular hoof 2 to be shod; therefore the shoe is neared to the hoof 2, in such a way that the points 5 of the two rows rest on its inferior edge. Due to the difference in height of the points, the resting regards only a limited number of points 5, so allowing a certain easiness of centring.

When the shoe has been correctly positioned, few steps of the horse allow stabilization of the shoe with respect to the hoof 2, in a way that all the points 5 are inserted in the thickness of the hoof 2. Then a traction is applied to the transversal band 7 acting on the tension element 9 foreseen between the two straps 8,8'. Such a traction causes the firm engagement of the bar 1 with the hoof 2.

It should be noted that the length of the longitudinal band 10 is chosen in such a way as to ensure the stability of the configuration of use, i.e. it is such that the angle $\alpha$ formed by the longitudinal band 10 with the two straps 8, 8' of the transversal band 7 is higher than 90°.

It is also possible to use two bands instead of only one longitudinal band 10. In this way the front extreme portion of the hoof 2 is affected by no band, and this is an advantageous aspect for the back hoofs, that, even if they accidentally come into contact with the front hoofs, they are not damaged by projecting metal portions.

From what has been said, it clearly results that the horseshoe according to the invention eliminates all the drawbacks of traditional horseshoes and in particular gives the following advantages:

- allows rapid, simple and sure application even by non-skilled persons,

- does not frighten or make the horse losing patience during the shoeing,

- allows shoeing without use of particular tools,

- does not cause piercing or damage to the nail,

- presents, due to the high number of points and to their differentiated orientation, a good stabilization against any stress, also torsion stresses, which often arise when the horse places the hoof on the ground,

- allows an easy and quick replacement with other more suitable shoes for particular requirements of use (for example, with nailed shoes for use on ice),

– allows the regulation of the plumbs of the horse for interposition between the bar 1 and the plate 4 of suitable wedges not reducing the useful height of the points 5,

– allows to forge the bar 1 without damaging the points 5,

– allows dilation movements of the hoof 2 and therefore a physiologic adaptation of the shoe to the movements of the same hoof during the running. This is favoured by the fact that the plate 4 has the side ends lacking in points but laterally delimited by the ends of the tie band 7, which are slightly distant from the hoof 2.

The invention also foresees that the horseshoe can be provided with a spongy elastic layer (not shown in the drawings) to be interposed between the hoof 2 and the plate 4. The purpose of this layer, which is preferably made of open-cells synthetic materiale impregnated with bituminous oils, is to realize a seal, between the hoof 2 and the plate 4, avoiding infiltrations of water, mud, little stones inside the hoof. This is particularly advantageous in so far with the moisture the hoof get to rot and flake.

This sponge elastic layer has also the function of spreading out with the growth of the nail, in order to always ensure the correct filling of the internal recess limited by this.

In the embodiment shown in the drawings the plate 4 has been realized in one piece bent accordingly to the bar 1, to which it is applied. However it may be preferable to realize the plate 4 in several equal parts, separately applied to the bar 1. In this way it is possible to have further advantages and in particular:

- a cheaper manufacture, in so far the moulds for producing each portion are smaller and therefore less expensive;

- the possibility of adjusting to any size and shape bars with a suitable arrangement of equal pieces;

- the possibility of avoiding the cold bending of the plate provided that the separation area between adjacent pieces corresponds to the radial cuttings 6 of the bar 1.

CLAIMS

1.      A horseshoe comprising a bar (1) to be curved according to the external lower outline of the hoof (2) to be shod and provided with a plurality of points (5) placed parallely to its edge and which have to be introduced into the thickness of the nail and also comprising tie bands (7,10) for the bond to the hoof caracterized in that the points (5) are placed along at least a longitudinal row on at least a plate (4) applied to the bar (1), in which also the tie bands (7,10) provided with adjusting means of the tension are foreseen.

2.      A horseshoe according to claim 1 characterized in that the bar (1) and if necessary the plate (4) are provided with outer radial cuttings (6).

3.      A horseshoe according to claim 1 characterized in that the points (5) have different height.

4.      A horseshoe according to claim 1 characterized in that the points (5) are directly obtained in the plate (4) by blanking and subsequent bending of the blanked portions.

5.      A horseshoe according to claims 1 and 4 characterized in that the points (5) are obtained in separated plates, applied to a single bar (1).

6.      A horseshoe according to claims 1, 4 and 5 characterized in that the points (5) are placed on variedly oriented planes.

7.      A horseshoe according to claim 1 characterized in that the points (5) are placed along two parallel rows.

8.      A horseshoe according to claim 1 characterized in that the adjusting means (9) of the tension of the tie bands (7) is of a screw type.

9.      A horseshoe according to claim 1 characterized in that it comprises a sponge elastic layer interposed between the plate (4) and the inferior edge of the hoof (2).

10.      A horseshoe according to claim 9 characterized n that the sponge elastic layer is made of open-cells plastic material impregnated with bituminous oil.

11.      A horseshoe according to claim 1 characterized in that the points (5) are placed along the plate (4) except its end areas, near which the transversal tie band (7) is laterally spaced from the hoof (2).

**FIG.1**

**FIG.2**

**FIG.3**

0120294